# EUROPEAN PATENT APPLICATION

(11) **EP 4 459 726 A1**
(43) Date of publication of application: **06.11.2024**
(21) Application number: 24165931.7
(22) Date of filing: 25.03.2024
(51) Int. Cl.: H01M 10/04, H01M 50/209, H01M 50/249, H01M 50/264, H01M 50/291, H01M 50/293

(54) **BATTERY PACK**

(30) Priority: 26.03.2023 KR 20230039392; 04.05.2023 KR 20230058403
(71) Applicant: Samsung SDI Co., Ltd., Yongin-si, Gyeonggi-do 17084 (KR)
(72) Inventor: Kim, Jaemin, 17084 Yongin-si, Gyeonggi-do (KR); Cho, Mansik, 17084 Yongin-si, Gyeonggi-do (KR)
(74) Representative: Gulde & Partner

(57) **Abstract**

Provided is a battery pack including a plurality of battery cells arranged in a first direction, and a side plate covering a periphery of the plurality of battery cells in a second direction crossing the first direction, the side plate including a columnar projection protruding toward between battery cells and being disposed between adjacent battery cells along the first direction and slidably coupled along the first direction. By providing a longitudinal internal pressure between the adjacent battery cells, the position of the battery cells is firmly fixed. As a result, sufficient rigidity of the plurality of battery cells may be secured, and the columnar projection is automatically aligned between the adjacent battery cells through a displacement of the columnar projection slidably assembled along the arrangement direction of the battery cells.

## Description

### BACKGROUND

### Field of the Disclosure

One or more embodiments relate to a battery pack.

### Description of the Related Art

In general, a secondary battery may be charged and discharged, unlike a primary battery that cannot be charged. Secondary batteries may be used as energy sources for mobile devices, electric vehicles, hybrid vehicles, electric bicycles, and uninterruptible power supplies. Depending on the type of an external device to which a secondary battery is applied, secondary batteries may be used in the form of a single battery or a module in which multiple batteries are connected and bundled into a single unit.

Small mobile devices such as mobile phones may operate for a certain amount of time with the output and capacity of a single battery. However, in cases where long-term driving and high-power driving are required, such as in the case of electric vehicles and hybrid vehicles that consume a lot of power, a module type including a plurality of batteries may be preferred due to problems of output and capacity. The output voltage or output current may be increased according to the number of built-in batteries.

### SUMMARY

The invention is defined by the appended claims. The description that follows is subjected to this limitation. Any disclosure lying outside the scope of said claims is only intended for illustrative as well as comparative purposes.

According to one aspect of the present disclosure, a battery pack including a plurality of battery cells arranged in a first direction and a side plate covering a periphery of a plurality of battery cells along a second direction crossing (orthogonal to) the first direction is provided. The side plate includes a columnar projection protruding toward between battery cells and is disposed between adjacent battery cells along the first direction and slidably coupled along the first direction. The columnar projection protrudes toward battery cells and between adjacent battery cells along the first direction. The columnar projection may physically and firmly bind the battery cells adjacent to each other, while blocking electrical interference between adjacent battery cells. In addition, through the displacement of the columnar projection along the first directio, the columnar projection may be induced to the correct position between the battery cells adjacent to each other.

In other words, one or more embodiments include a battery pack comprising a columnar projection interposed between neighboring battery cells along an arrangement direction of a plurality of battery cells to provide a longitudinal pressure resistance along a first direction, wherein the columnar projection is displacably assembled to automatically align into a fixed position between neighboring battery cells along the arrangement direction of the plurality of battery cells. By providing a longitudinal internal pressure between the adjacent battery cells, the position of the battery cells may be firmly fixed. As a result, sufficient rigidity of the plurality of battery cells may be secured and the columnar projection may be automatically aligned between the adjacent battery cells through a displacement of the columnar projection slidably assembled along the arrangement direction of the battery cells.

Additional aspects will be set forth in part in the description which follows and, in part, will be apparent from the description, or may be learned by practice of the presented embodiments of the present disclosure.

According to an embodiment, a width of the columnar projection along the first direction may be formed variably along or may vary in the second direction. For example, the width of the columnar projection along the first direction may be formed variably along or may vary in the second direction so that the columnar projection formed on the side plate converts or is configured to convert pressure or displacement in the second direction into pressure or displacement in the first direction between adjacent battery cells.

According to another embodiment, the width of the columnar projection may decrease from an outer position adjacent to the side plate to an inner position adjacent to the battery cell along the second direction.

According to another embodiment, the columnar projection may be formed in a wedge shape including an apex portion protruding longest from the side plate and side surfaces on both sides extending to converge toward the apex portion.

According to another embodiment, the apex portion may be formed as a rounded curved surface.

According to another embodiment, the side surface may be formed as a rounded curved surface.

According to another embodiment, the apex portion of the columnar projection may be formed as a convex curved surface toward the outside of the columnar projection. The side surface of the columnar projection may include a curved surface concave toward the inside of the columnar projection.

According to another embodiment, the side surface of the columnar projection may be formed in a concave shape to surround the convex corner portion of the battery cell. When the convex corner portion of the battery cell matching the concave first curved surface is seated on the first curved surface of the position-aligned columnar projection, the concave first curved surface of the columnar projection and the convex corner portion of the battery cell may provide solid support to each other while forming surface contact with each other.

According to another embodiment, the side surface of the columnar projection may include a first curved surface contacting the side plate and a convex second curved surface in contact with the apex portion.

According to another embodiment, the first and second curved surfaces may have centers of curvature at opposite positions with the side surface of the columnar projection as a boundary.

According to another embodiment, the side surface(s) of the columnar projection may further include an inflection formed between the first and second curved surfaces.

According to another embodiment, the first curved surface may include a concave curved surface from the side plate to the inflection. The second curved surface may include a convex curved surface extending from the inflection to the apex portion.

According to another embodiment, the battery cell(s) may include a wide side surface facing an adjacent battery cell of the battery cells along the first direction and a narrow side surface facing the side plate. The narrow side surface of the battery cell may face the side plate. A corner portion where the narrow side surface and the wide side surface of the battery cell come into contact with each other may face the side surface of the columnar projection protruding from the side plate.

According to another embodiment, the battery pack may further include a sliding guide disposed between the columnar projection and the side plate to support sliding of the columnar projection along the first direction. In other words, the sliding guide is configured to support sliding of the columnar projection along the first direction.

According to another embodiment, the sliding guide may include guide blocks formed at both ends of the columnar projection along a third direction crossing (orthogonal to) the first and second directions, and a guide slit formed on the side plate to insert the guide block, e.g. into which the guide block may be insertable, and/or wherein the guide block is inserted.

According to another embodiment, a width of the guide slit along the first direction may be wider or greater than a width of the guide block along the first direction, and/or the width of the guide block along the first direction may be wider (or greater) than a width of the columnar projection along the first direction.

According to another embodiment, the guide block and the guide slit may be fitted to each other. The guide block and the guide slit may include a first guide block and a first guide slit and a second guide block and a second guide slit that support sliding of the guide block through physical interference with each other. In other words, the second guide block and the second guide slit are configured to support sliding of the guide block through physical interference with each other. The first and second guide blocks may form substantially the same width of the guide block along the first direction. The first and second guide slits may form substantially the same width of the guide slits along the first direction. In other words, the first and second guide slits may form substantially the same width along the first direction. Accordingly, the displacement of the columnar projection may be equally regulated.

According to another embodiment, the first and second guide slits and the first and second guide blocks may be formed at positions or may be offset from each other along the third direction corresponding to a height direction of a side plate in which the columnar projection extends. The first and second guide slits and the first and second guide blocks may be formed at positions or may be offset from each other along the second direction corresponding to a thickness direction of the side plate.

According to another embodiment, the guide block may include a first guide block, e.g. the above-mentioned first guide block, bent along the second direction at both ends of the columnar projection along the third direction and a second guide block, e.g. the above-mentioned second guide block, bent from the first guide block along the third direction.

According to another embodiment, the second guide block may be bent along the third direction from an outer position along the second direction among the first guide blocks.

According to another embodiment, a first guide slit into which the first guide block is inserted may be opened along the second direction on or in an inner surface of a side plate facing the battery cell. In other words, the first guide slit may be opened along the second direction on or in an inner surface of the side plate facing the battery cell. A second guide slit into which the second guide block is inserted may be opened along the third direction on or in an end surface connecting an inner surface of a side plate facing the battery cell to an outer surface of a side plate opposite to the battery cell. In other words, the second guide slit may be opened along the third direction on or in the end surface.

According to another embodiment, the side plate may include a first member extending from a corner where the inner surface and the end surface of the side plate come into contact with each other to contact the first and second guide slits. The first and second guide slits may be connected to each other through an insertion space surrounding the first member.

According to another embodiment, the columnar projection may be slidably supported on the side plate along the first direction. The first guide block inserted into the first guide slit may be positioned along the third direction between the first member and the inner surface of the side plate, and may be positioned and fixed on the side plate along the third direction. Through a second guide block supported on the outer surface of the first member opposite to the inner surface of the side plate on which the columnar projection is supported, the columnar projection and the second guide block may be supported on opposite inner and outer sides of the side plate. The columnar projection and the second guide block may be fixed in position on the side plate along the second direction. In other words, the columnar projection and the second guide block may be supported on opposite inner and outer sides of the side plate through the second guide block.

According to another embodiment, the second guide slit may be open along the third direction on the end surface of the side plate formed between the inner surface of the side plate facing the battery cell and the outer surface of the side plate opposite to the battery cell and/or may be opened along the second direction on the outer surface of the side plate.

### BRIEF DESCRIPTION OF THE DRAWINGS

Embodiments will be more clearly understood from the following detailed description taken in conjunction with the accompanying drawings in which:
FIG. 1 is an exploded perspective view of a battery pack according to an embodiment;
FIG. 2 is a diagram for explaining physical interference between a columnar projection of a side plate shown in FIG. 1 and a battery cell;
FIG. 3 is an enlarged plan view of a portion shown in FIG. 2;
FIG. 4 is a perspective view of the side plate shown in Figure 1;
FIG. 5 is an exploded perspective view of the side plate shown in FIG. 4; and
FIGS. 6A to 6C are views for explaining an assembly between a guide slit of the side plate and the columnar projection, wherein FIGS. 6A and 6B are views before and after assembly between the guide slit and the guide block of the columnar projection, respectively, and FIG. 6C shows a perspective view cut along line C-C in FIG. 6B.

### DETAILED DESCRIPTION

Hereinafter, a battery pack according to a preferred embodiment will be described with reference to the accompanying drawings, however, they may be embodied in different forms and should not be construed as limited to the embodiments set forth herein. Rather, these embodiments are provided so that this disclosure will be thorough and complete, and will fully convey exemplary implementations to those skilled in the art.

In the figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present.

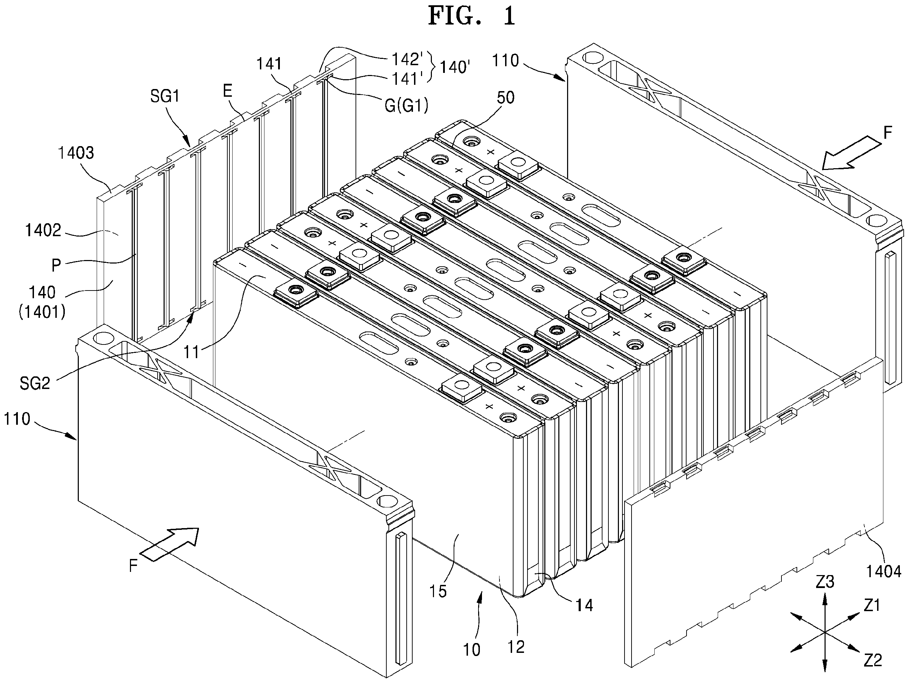

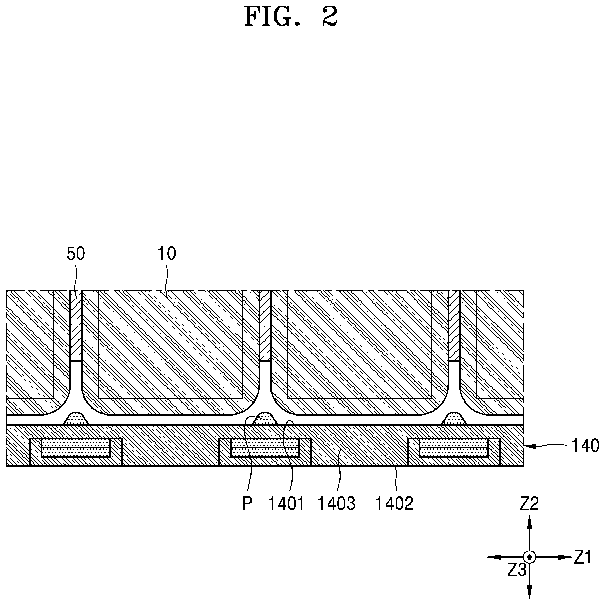

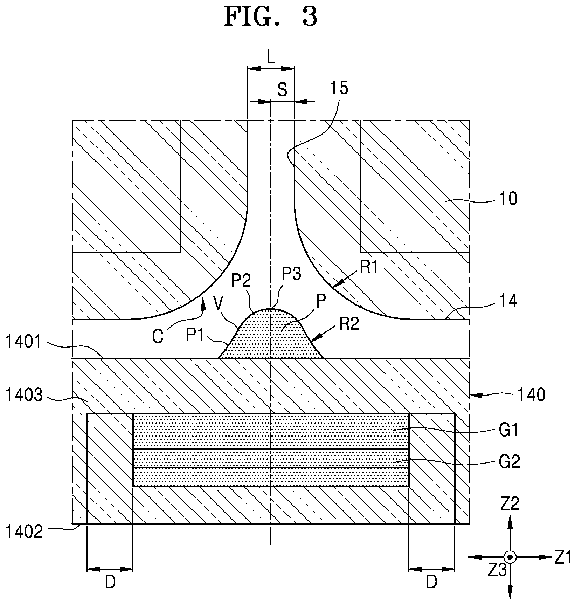

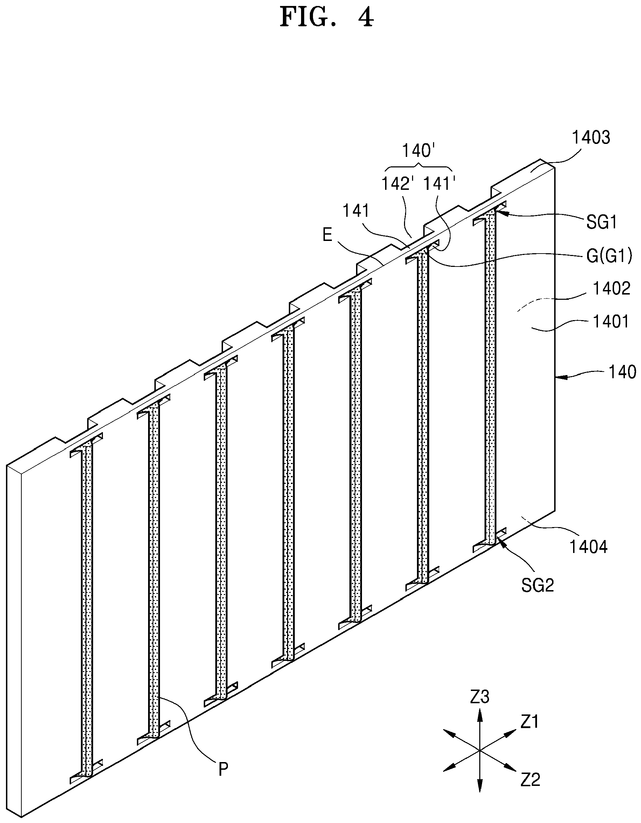

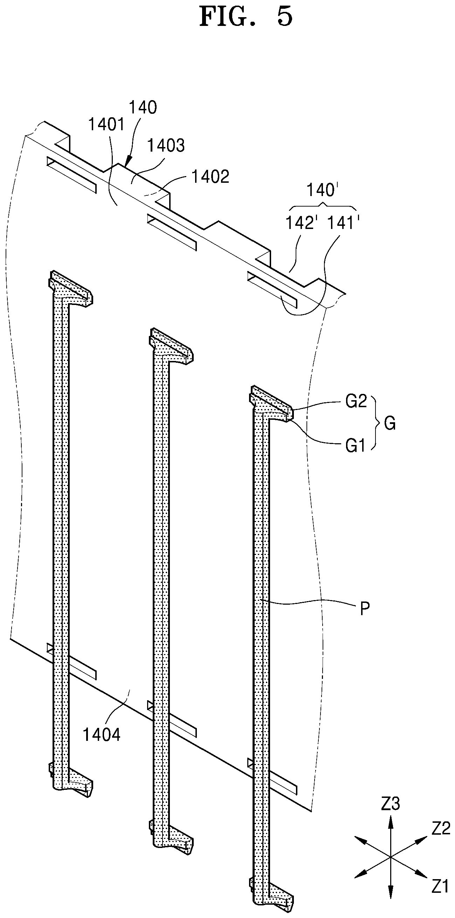

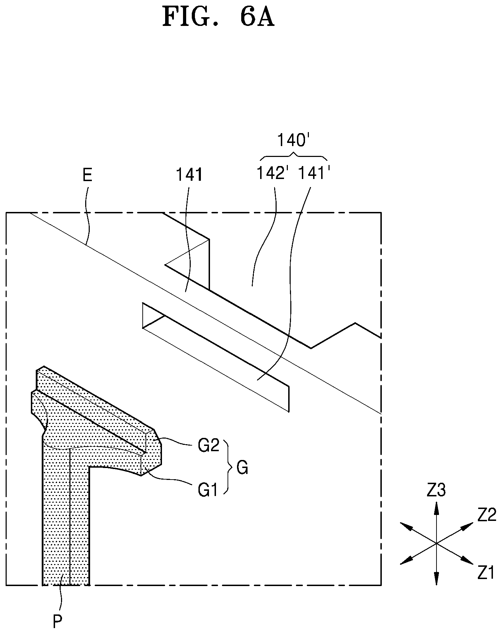

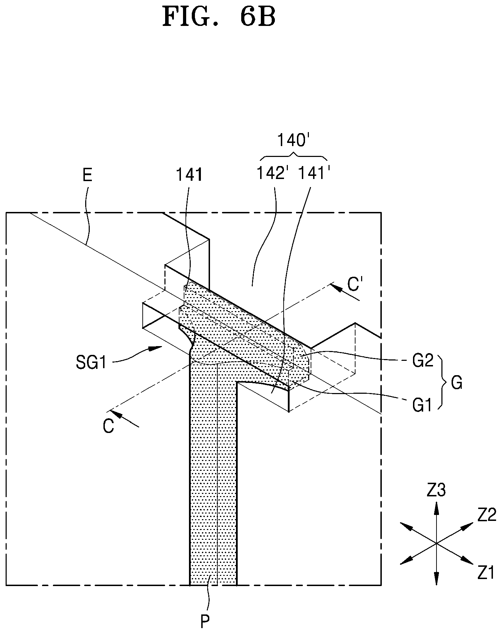

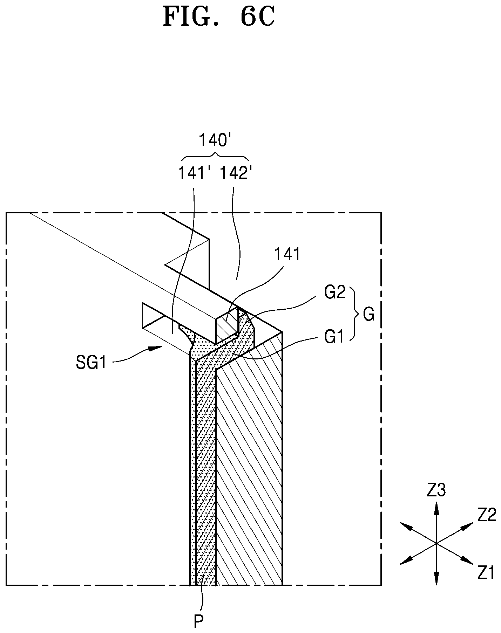

FIG. 1 is an exploded perspective view of a battery pack according to an embodiment. FIG. 2 is a plan view for explaining a physical interference between a columnar projection P of a side plate 140 shown in FIG. 1 and a battery cell 10. FIG. 3 is an enlarged plan view of a portion shown in FIG. 2. FIG. 4 shows a perspective view of the side plate 140 shown in FIG. 1. FIG. 5 is an exploded perspective view of the side plate 140 shown in FIG. 4. FIGS. 6A to 6C are views for explaining an assembly between a guide slit 140*'* in the side plate 140 and the columnar projection P, wherein FIGS. 6A and 6B show views showing before and after the assembly between the guide slit 140' and the guide block G of the columnar projection P, respectively, and FIG. 6C is a perspective view cut along the line C-C of FIG. 6B.

Referring to FIGS. 1 to 3, a battery pack according to an embodiment includes a plurality of battery cells 10 arranged along a first direction Z1 and a side plate 140 covering an outside of the plurality of battery cells 10 along a second direction Z2 crossing the first direction Z1. The side plate 140 includes a columnar projection P that protrudes toward between the battery cells 10 and is disposed between the battery cells 10 adjacent to each other along the first direction Z1, and is slidably coupled along the first direction Z1.

In some embodiments, the battery pack includes the plurality of battery cells 10 arranged along the first direction Z1. For example, each of the plurality of battery cells 10 may include a terminal surface 11 on which electrode terminals are formed, a bottom surface 12 opposite to the terminal surface 11, and side surfaces 14 and 15 connecting the terminal surface 11 and the bottom surface 12 to each other. In some embodiments, the terminal surface 11 and the bottom surface 12 may be disposed to face each other along a third direction Z3 crossing the first and second directions Z1 and Z2. In some embodiments, the third direction Z3 may correspond to a height direction of the battery cell 10 from the bottom surface 12 to the terminal surface 11, and as described below, the third direction Z3 may correspond to a height direction of the side plate 140 from the upper surface 1403 to the lower surface 1404 of the side plate 140.

In some embodiments, the side surfaces 14 and 15 may include a pair of wide side surfaces 15 disposed facing each other along the first direction Z1, and a pair of narrow side surfaces 14 disposed facing each other along a second direction Z2 crossing the first direction Z1, and in the plurality of battery cells 10 arranged along the first direction Z1, adjacent battery cells 10 arranged adjacent to each other along the first direction Z1 may be disposed to face each other with wide side surfaces 15, and the side plate 140 may be disposed across the narrow side surfaces 14 of the plurality of battery cells 10 arranged along the first direction Z1.

The battery pack includes the side plate 140 or may include a pair of side plates 140 facing each other along the second direction Z2 with the plurality of battery cells 10 therebetween. In some embodiments, the side plate(s) 140 may be disposed outside the plurality of battery cells 10 along the second direction Z2 crossing the first direction Z1, and for example, a pair of side plates 140 disposed across a pair of narrow side surfaces 14 of a battery cell 10 of the plurality of battery cells 10 and disposed facing each other along the second direction Z2 may be included. The side plates 140 may be disposed in pairs on both left and right sides along the second direction Z2 or may be disposed on either left or right side along the second direction Z2, and in various embodiments, the side plate 140 may be disposed on at least one side of both left and right sides along the second direction Z2. For example, one pair of side plates 140 may be disposed for each battery cell 10 of the plurality of battery cells 10.

In some embodiments, the side plate 140 may extend along the first direction Z1 across the narrow side surfaces 14 of the plurality of battery cells 10 arranged along the first direction Z1, and a plurality of columnar projections P spaced apart from each other may be formed on the side plate 140 facing the narrow side surface 14 of the battery cell 10 along the first direction Z1. The columnar projection P is disposed between the battery cells 10 adjacent to each other along the first direction Z1 to physically and firmly bind the battery cells 10 adjacent to each other, and in addition, the columnar projection P may block electrical interference between adjacent battery cells 10. In some embodiments, the side plate 140 may include an inner surface 1401 facing the battery cell 10 along the second direction Z2 and an outer surface 1402 opposite the battery cell 10, and may include end surfaces 1403 and 1404 connecting the inner surface 1401 and the outer surface 1402 to each other, and the end surfaces 1403 and 1404 of the side plate 140 may include an upper surface 1403 and a lower surface 1404 forming both ends of the side plate 140 along the third direction Z3. In some embodiments, the columnar projection P may be formed on the inner surface 1401 of the side plate 140 facing the battery cell 10, and accordingly, the columnar projection P may form physical interference with the battery cells 10 directly facing each other along the second direction Z2. Throughout the specification, the side plate 140 may include a columnar projection P, but in relation to the columnar projection P, the side plate 140 may refer to the main body of the side plate 140 excluding the columnar projection P, and for example, that the columnar projection P is formed on the inner surface 1401 of the side plate 140 may refer to that the columnar projection P is formed on the inner surface 1401 of the body of the side plate 140 facing the battery cell 10, and as will be described later, that the side surfaces P1 and P2 of the columnar projection P are in contact with the side plate 140 may refer to that the side surfaces P1 and P2 of the columnar projection P come into contact with the main body of the side plate 140. In some embodiments, the body of the side plate 140 may refer to a skeleton of the side plate 140 integrally formed in a substantially flat plate shape, except for the columnar projection P. In some embodiments, as described below, the sliding guides SG1 and SG2 formed between the columnar projection P and the side plate 140 may refer to a configuration that mediates the sliding assembly between the columnar projection P and the main body of the side plate 140 between the columnar projection P and the main body of the side plate 140. In some embodiments, the sliding guides SG1 and SG2 may include guide blocks G, e.g. formed at both ends of the columnar projection P, and in this sense, the main body of the side plate 140 may refer to a flat plate-shaped main part forming the skeleton of the side plate 140 excluding the columnar projection P and the guide blocks G formed at both ends of the columnar projection P.

The side plate 140 may provide internal pressure in the longitudinal direction along the first direction Z1 while being disposed between the battery cells 10 adjacent to each other along the first direction Z1, and accordingly, the positions of the battery cells 10 adjacent to each other along the first direction Z1 may be firmly fixed, and as the position of each battery cell 10 is firmly fixed, overall rigidity of the plurality of battery cells 10 arranged along the first direction Z1 may be reinforced.

In some embodiments, a pair of side plates 140 may be disposed on both left and right sides of the plurality of battery cells 10 along the second direction Z2. The pair of side plates 140 disposed facing each other in the second direction Z2 may be biased in the direction facing each other according to the assembly pressure directed toward each other along the second direction Z2. The columnar projection P of the pair of side plates 140 biased along the second direction Z2 may be disposed between the battery cells 10 adjacent to each other along the first direction Z1 while the first direction Z1 may form a longitudinal internal pressure that follows. Accordingly, position fixing between the battery cells 10 adjacent to each other along the first direction Z1 may be firmly achieved, and as a result, while the position of each battery cell 10 arranged along the first direction Z1 is firmly fixed, it is possible to prevent the arrangement of the plurality of battery cells 10 arranged along the first direction Z1 according to the lateral pressure (lateral pressure) applied along the second direction Z2 from being disturbed. Furthermore, it is possible to prevent the battery pack including the plurality of battery cells 10 from bending in the second direction Z2. In addition, during progress or movement of the battery pack, depending on the weight along the third direction Z3 intersecting the first direction Z1, the arrangement of the plurality of battery cells 10 arranged along the first direction Z1 may be prevented from being disturbed or the battery pack including the plurality of battery cells 10 may be prevented from being bent in the third direction Z3.

In some embodiments, the side plate 140 may be urged toward a plurality of adjacent battery cells 10 along the second direction Z2 according to the assembly pressure along the second direction Z2, and the pair of side plates 140 disposed to face each other with the plurality of battery cells 10 disposed therebetween may be biased in a direction facing each other along the second direction Z2 through a pair of end plates 110 (see FIG. 1) coupled to both ends of the side plate 140 along the first direction Z1. In some embodiments, the assembly pressure of the side plate 140 may be generated when the pair of side plates 140 facing each other are bound by the pair of end plates 110 coupled to both ends of the side plate 140. In various embodiments, the pair of side plates 140 and the pair of end plates 110 surrounding the plurality of battery cells 10 may bind the plurality of battery cells 10 while being coupled to each other, and the assembly pressure of the side plate 140 may be generated from tension.

Referring to FIGS. 2 and 3, in one embodiment, the columnar projection P may be formed at an intermittent position along the first direction Z1 in which the side plate 140 extends, and/or the columnar projection P may be disposed between the battery cells 10 adjacent to each other along the second direction Z2 crossing the first direction Z1. In some embodiments, that the columnar projection P of the side plate 140 is disposed between the battery cells 10 adjacent to each other along the second direction Z2 refers to that, while the side plate 140 biased toward the plurality of battery cells 10 along the second direction Z2 or the columnar projection P formed on the side plate 140 is disposed between the battery cells 10 adjacent to each other along the second direction Z2, the adjacent battery cells 10 may be pressurized with a tendency to separate from each other, and according to the pressurization of the columnar projection P, internal pressure in the longitudinal direction between the plurality of battery cells 10 arranged along the first direction Z1 may be formed.

In some embodiments, in the columnar projection P formed on the side plate 140, to convert pressure or displacement along the second direction Z2 into pressure or displacement along the first direction Z1, the width of the columnar projection P measured along the first direction Z1 may be formed variably along the second direction Z2. More specifically, the width of the columnar projection P may decrease from an outer position adjacent to the side plate 140 to an inner position adjacent to the battery cell 10 along the second direction Z2. Here, the outer position of the columnar projection P may refer to a position relatively far from the battery cell 10 or a position adjacent to the side plate 140, and the inner position of the columnar projection P may refer to a position relatively adjacent to the battery cell 10 or a position far from the side plate 140. For example, in one embodiment, the columnar projection P may protrude from an outer position in contact with the side plate 140 toward an inner position adjacent to the battery cell 10 along the second direction Z2, and while protruding from an outer position in contact with the side plate 140 to an inner position toward the battery cell 10 along the second direction Z2, the width of the columnar projection P measured along the first direction Z1 may decrease along the projection direction of the columnar projection P from the lateral position to the medial position.

In some embodiments, the columnar projection P is generally formed in a wedge shape having a width that decreases while going from an outer position in contact with the side plate 140 to an inner position adjacent to the battery cell 10 along the second direction Z2, and in various embodiments, the columnar projection P may be formed in various shapes to the extent of having a width that decreases from the side plate 140 toward the battery cell 10. For example, the columnar projection P may be formed in various shapes, e.g. round shapes, such as a smooth curved surface, an angular plane, or a combination of a curved surface and a plane. For example, the columnar projection P may include an apex portion P3 protruding longest from the side plate 140 and side surfaces P1 and P2 on both sides extending to converge toward the apex portion P3. For example, the columnar projection P may include an apex portion P3 formed at the innermost position and side surfaces P1 and P2 on both sides extending from the inner surface 1401 of the side plate 140 to the apex portion P3 towards the battery cell 10 or to enter between the battery cells 10 adjacent to each other. In various embodiments, the apex portion P3 may be formed as a rounded curved surface or formed as an angled corner, and the side surfaces P1 and P2 may be formed as rounded curved surfaces or as inclined surfaces extending toward the apex portion P3 at a set angle. For example, the columnar projection P may be symmetrically identical with respect to the second direction Z2.

In some embodiments, the columnar projection P may be formed in a wedge shape of a rounded curved surface. In some embodiments, the apex portion P3 of the columnar projection P may include a convex shape toward the outside of the columnar projection P, and the side surfaces P1 and P2 of the columnar projection P may include concave shapes toward the inside of the columnar projection P. For example, in one embodiment, the apex portion P3 of the columnar projection P may include a convex curved surface toward the outside of the columnar projection P, and the side surfaces P1 and P2 of the columnar projection P may include curved surfaces that are concave toward the inside of the columnar projection P. In some embodiments, the side surfaces P1 and P2 of the columnar projection P may press the corner portion C toward the first direction Z1 while surrounding the corner portion C of the battery cell 10, and the side surfaces P1 and P2 of the columnar projection P may press the corner portions C of the battery cells 10 adjacent to each other along the first direction Z1 to move away from each other. For example, the side surfaces P1 and P2 of the columnar projection P may be formed in a shape matched with the corner portion C to surround the corner portion C of the battery cell 10, and/or the side surfaces P1 and P2 of the columnar projection P may include a concave shape so that the narrow side surface 14 and the wide side surface 15 of the battery cell 10 surround a corner portion C of a convex shape in contact with each other. In one embodiment, the side surfaces P1 and P2 of the columnar projection P may include a concave curved surface to surround a corner portion C of a convex curved surface where the narrow side surface 14 and the wide side surface 15 of the battery cell 10 come into contact with each other.

In some embodiments, the side surfaces P1 and P2 of the columnar projection P may include a first concave curved surface P1 in contact with the side plate 140 (more specifically, the inner surface 1401 of the side plate 140) and a second convex curved surface P2 in contact with the apex portion P3, and the first and second curved surfaces P1 and P2 may have centers of curvature at opposite positions and have positive (+) and negative (-) radii of curvature that are opposite to each other, and may include an inflection V formed between the first and second curved surfaces P1 and P2. In various embodiments, that the first and second curved surfaces P1 and P2 have a radius of curvature does not limit that the first and second curved surfaces P1 and P2 are formed in an arc shape having a constant radius of curvature but the first and second curved surfaces P1 and P2 may have radii of curvature that vary along the profile, and refer to that the first and second curved surfaces P1 and P2 may refer to a concave curved surface and a convex curved surface having radii of curvature of opposite signs. In this sense, the inflection V may refer to a position that changes to a radius of curvature of an opposite sign. For example, in one embodiment, with the inflection V as a boundary, the columnar projection P may include a concave first curved surface P1 from the side plate 140 to the inflection V, a convex second curved surface P2 from the inflection V to the apex portion P3, and a convex apex portion P3 connecting the second curved surfaces P2 of both side surfaces 14 and 15 to each other at the end of the second curved surface P2.

In some embodiments, the narrow side surface 14 of the battery cell 10 may face the inner surface 1401 of the side plate 140, and the corner portion C where the narrow side surface 14 and the wide side surface 15 of the battery cell 10 come into contact with each other may face the side surfaces P1 and P2 of the columnar projection P, which extends from the inner surface 1401 of the side plate 140 and protrudes from the inner surface 1401, and for example, a convex corner portion C connecting the narrow side surface 14 and the wide side surface 15 of the battery cell 10 may face the concave first curved surface P1 of the columnar projection P. For example, in one embodiment, the narrow side surface 14 of the battery cell 10 may come into contact with the inner surface 1401 of the side plate 140, and the corner portion C connected to the narrow side surface 14 of the battery cell 10 may contact side surfaces P1 and P2 of the columnar projection P protruding from the inner surface 1401 of the side plate 140. Here, the convex corner portion C connecting the narrow side surface 14 and the wide side surface 15 of the battery cell 10 to each other is the concave side surface P1 and P2 of the columnar projection P, for example, may be formed in a shape complementary to the first curved surface P1 connected to the inner surface 1401 of the side plate 140 during the columnar projection P, and the first curved surface P1 may be concave in a shape complementary to a convex corner portion C of the battery cell 10.

In some embodiments, the columnar projection P may surround a corner portion C connecting the narrow side surface 14 and the wide side surface 15 of the battery cell 10 to each other, and extend beyond the corner portion C and between the narrow side surfaces 14 of the battery cells 10 adjacent to each other. In some embodiments, the side surfaces P1 and P2 of the columnar projection P may apply a longitudinal internal pressure between adjacent battery cells 10 while surrounding a corner portion C of the battery cell 10. In addition, the side surfaces P1 and P2 may serve to guide the columnar projection P to a proper position between the battery cells 10 adjacent to each other. For example, according to the assembly pressure of the side plate 140 assembled facing each other with the plurality of battery cells 10 disposed therebetween, the columnar projection P entering toward the plurality of battery cells 10 along the second direction Z2 together with the side plate 140 may be guided to the correct position between the battery cells 10 adjacent to each other through the side surfaces P1 and P2 of the columnar projection P. As the apex portion P3 that first enters toward the battery cell 10 along the second direction Z2 and the second curved surface P2 that follows are formed in a convex shape, depending on the contact with the battery cell 10, a relatively large displacement may be generated with respect to the columnar projection P, and for example, a larger displacement than at least a concave shape may be generated along the first direction Z1, and position alignment of the columnar projection P may be rapidly performed according to contact with the battery cell 10. In some embodiments, as the convex corner portion C of the battery cell 10 matching the concave first curved surface P1 is seated on the first curved surface P1 of the position-aligned columnar projection P, the concave first curved surface P1 of the columnar projection P and the convex corner portion C of the battery cell 10 may provide solid support to each other while forming surface contact with each other, and for example, the position of the battery cells 10 may be fixed while the battery cells 10 adjacent to each other are firmly supported with respect to each other with the columnar projection P disposed therebetween.

In some embodiments, while the columnar projection P enters toward the battery cell 10 along the second direction Z2 according to the assembly pressure of the side plate 140 along the second direction Z2, the columnar projection P may be guided and entered between the battery cells 10 adjacent to each other in the order of the second curved surface P2 and the first curved surface P1 from the apex portion P3 of the columnar projection P. As the first curved surfaces P1 of the columnar projection P are seated on the corner portions C of the battery cells 10 adjacent to each other, the columnar projection P may be aligned in the correct position. In some embodiments, the columnar projection P may be disposed between battery cells 10 adjacent to each other along the first direction Z1, and it is possible to prevent the position of the battery cells 10 from being moved due to gaps or gaps in the support between the neighboring battery cells 10 while being brought into close contact between the corner portions C of the battery cells 10 adjacent to each other.

In some embodiments, the columnar projection P may allow a preset displacement along the first direction Z1 corresponding to the length of the side plate 140, and along the first direction Z1 through the displacement of the columnar projection P, columnar projections P may be aligned at regular positions between the battery cells 10 adjacent to each other. The columnar projection P may be disposed between battery cells 10 adjacent to each other along a second direction Z2 crossing the first direction Z1, and if the position of the columnar projection P is not aligned between the battery cells 10 adjacent to each other and stays at an erroneous position, rather, since the columnar projection P may interfere with the assembly of the side plate 140, in one embodiment, the columnar projection P may be slidably assembled with respect to the side plate 140 to allow displacement of the columnar projection P along the first direction Z1. Through the displacement of the columnar projection P along the first direction Z1, the columnar projection P may be induced to the correct position between the battery cells 10 adjacent to each other, and as described above, the columnar projection P may be guided to the correct position between the battery cells 10 adjacent to each other through the apex portion P3 and the side surfaces P1 and P2 of the columnar projection P.

In some embodiments, in the battery pack, through the compression process preceding the assembly of the side plate 140, in a state where a plurality of battery cells 10 arranged along the first direction Z1 follow the longitudinal pressure F along the first direction Z1 (see FIG. 1) so that the position of each battery cell 10 is temporarily fixed, the side plate 140 may be assembled, and for example, in a state in which neighboring battery cells 10 are in close contact with each other according to the longitudinal pressure F (see FIG. 1), that is, in a state where the position of each battery cell 10 is temporarily fixed in relation to the other neighboring battery cells 10, while the columnar projection P formed on the side plate 140 through the assembly of the side plate 140 enters between the battery cells 10 adjacent to each other along the second direction Z2, additional longitudinal internal pressure may be applied between the battery cells 10 adjacent to each other along the first direction Z1 by columnar projection P, and accordingly, finally, the position of each battery cell 10 may be firmly fixed.

As such, in one embodiment, before assembling the side plate 140, by providing longitudinal pressure F (see FIG. 1) at both ends of the plurality of battery cells 10 arranged along the first direction Z1, it is possible to bring the battery cells 10 into close contact with each other, and accordingly, the position of each battery cell 10 may be temporarily fixed, and the position of the battery cell 10 temporarily fixed along the first direction Z1 may have a certain degree of deviation for each target battery pack to which each compression process is applied.

For example, the stiffness of the battery cells 10 forming each battery pack or the longitudinal pressure F (see FIG. 1) applied in each compression process may vary depending on variations, and the like, and for example, the position of each battery cell 10 along the first direction Z1 that may be cumulatively accumulated along the first direction Z1 may also vary according to variations in rigidity of any one battery cell 10 arranged along the first direction Z1.

Referring to Figures 4, 5, and 6a to 6c, in one embodiment, to absorb the positional deviation of the battery cell 10 in consideration of the position of the battery cell 10 or the positional deviation of the battery cell 10, which may be differentially formed for each battery pack, and to be naturally induced between adjacent battery cells 10 adaptively to the positions of the battery cells 10 that may be differentially formed for each battery pack, displacement of columnar projection P may be allowed. Through the side surfaces P1 and P2 of the columnar projection P, sliding guides SG1 and SG2 may be formed between the columnar projection P and the side plate 140 so that the columnar projection P may be guided to the correct position toward the battery cells 10 adjacent to each other, and according to the assembly pressure of the side plate 140 along the second direction Z2, displacement of the columnar projection P in the first direction Z1 may be formed. To allow that the columnar projection P may be guided to the correct position between the battery cells 10 adjacent to each other according to the displacement of the columnar projection P in the first direction Z1, the side surfaces P1 and P2 of the columnar projection P are formed with variable widths from the side plate 140 toward the battery cell 10 along the second direction Z2. More specifically, the columnar projection P may be formed in a wedge shape with a width decreasing along the first direction Z1 from the side plate 140 toward the battery cell 10 along the second direction Z2.

Sliding guides SG1 and SG2 may be formed between the columnar projection P and the side plate 140. The sliding guides SG1 and SG2 may include a guide block G slidably coupled between the columnar projection P and the side plate 140 and formed at both ends of the columnar projection P along the third direction Z3 crossing the first and second directions Z1 and Z2, and a guide slit 140' of the side plate 140 into which the guide block G is inserted.

In some embodiments, the guide blocks G formed at both ends of the columnar projection P and the guide slits 140' of the side plate 140 into which the guide blocks G are inserted may be formed with different widths. For example, the width of the guide slits 140' may be wider than that of the guide blocks G formed at both ends of the columnar projection P. In some embodiments, the guide block G and the guide slit 140' are for supporting the sliding of the columnar projection P along the first direction Z1, and may be formed in a form elongated along the first direction Z1. In some embodiments, the width of the guide slit 140' along the first direction Z1 may be wider than that of the guide block G along the first direction Z1: For example, the difference between the widths occupied by the guide block G among the widths of the guide slits 140' following the first direction Z1 may correspond to the maximum displacement of the columnar projection P sliding integrally with the guide block G. However, in one embodiment, the maximum displacement of the columnar projection P may refer to the maximum displacement along both positive (+)/negative (-) directions along the first direction Z1. For example, the maximum displacement of the columnar projection P may refer to the maximum displacement that the guide block G may move within the guide slit 140' from one end position to the other end position of the guide slit 140' formed on the side plate 140. The maximum displacement along one of the positive (+)/negative (-) directions based on the center position may correspond to half of the maximum displacement along both positive (+)/negative (-) directions. In some embodiments, the width of the guide block G inserted into the guide slit 140' among the widths of the guide slit 140', that is, the difference between the width of the guide block G minus the width of the guide block G occupied by the guide block 140' may correspond to the maximum displacement of the sliding allowed for the columnar projection P along the first direction Z1, that is, the maximum displacement along both positive (+)/negative (-) directions.

In some embodiments, the sliding guides SG1 and SG2 for guiding the sliding of the columnar projection P with respect to the side plate 140 may include an upper sliding guide SG1 and a lower sliding guide SG2 formed on the inner surface 1401 of the side plate 140, e.g. corresponding to the positions of both ends of the columnar projection P or the positions of both ends of the columnar projection P along the third direction Z3. These upper and lower sliding guides SG1, SG2 may include respectively guide blocks G formed at the upper and lower positions of the columnar projection P, respectively, and guide slits 140' formed respectively at upper and lower positions of the side plate 140. In some embodiments, the upper and lower sliding guides SG1 and SG2 may be formed in substantially symmetrical structures with respect to each other. Hereinafter, for convenience of understanding, it will be described based on the upper sliding guide SG1, and unless otherwise noted, the guide block G and the guide slit 140' may refer to the guide block G and the guide slit 140' of the upper sliding guide SG1. For example, as described below, that the guide block G includes the first and second guide blocks G1 and G2 or the guide slit 140' includes the first and second guide slits 141' and 142' may refer to that the guide block G of the upper sliding guide SG1 includes first and second guide blocks G1 and G2, and similarly, that the guide slit 140' of the upper sliding guide SG1 includes the first and second guide slits 141' and 142'. As described below, that the guide block G is formed at both ends of the columnar projection P along the third direction Z3 may refer to that for the upper sliding guide SG1, the guide block G is formed at the top position of the columnar projection P along the third direction Z3, and that the guide slits 140' are formed on the side plates 140 corresponding to the positions of both ends of the columnar projection P along the third direction Z3 may refer to that the guide slit 140' is formed at an upper position of the side plate 140 along the third direction Z3 with respect to the upper sliding guide SG1. However, below, the upper sliding guide SG1 and the lower sliding guide SG2 may be comprehensively described, and for example, that guide blocks G are formed at both ends of the columnar projection P along the third direction Z3, or guide slits 140' are formed in the side plate 140 corresponding to the positions of both ends of the columnar projection P along the third direction Z3, or second guide slits 142' are formed on the upper surface 1403 and the lower surface 1404 of the side plate 140, or the second guide block G2 is bent upward or downward from the first guide block G1 bent along the second direction Z2 from both ends of the columnar projection P may be understood as describing comprehensive technical details regarding the upper and lower sliding guides SG1 and SG2.

In some embodiments, the guide block G may include a first guide block G1 guided on the first guide slit 141' and a second guide block G2 guided on the second guide slit 142'. In some embodiments, the guide block G and the guide slit 140' may include a first guide block G1 and a first guide slit 141', and a second guide block G2 and a second guide slit 142', which are fitted to each other and support sliding motion through physical interference with each other. The first and second guide blocks G1 and G2 may be formed to have substantially the same width along the first direction Z1 to form the width of the guide block G, and the first and second guide slits 141' and 142' may be formed to have substantially the same width along the first direction Z1 to form the width of the guide slits 140'.

In some embodiments, the guide slit 140' formed on the side plate 140 may include first and second guide slits 141' and 142' formed at an upper position of the side plate 140 along the third direction Z3 in which the columnar projection P extends, and may include first and second guide slits 141' and 142' formed at positions offset from each other along the second and third directions Z2 and Z3. For example, the first guide slit 141*'* may be formed on the inner surface 1401 of the side plate 140 facing the battery cell 10. The second guide slit 142' may be formed on the end surfaces 1403 and 1404 and the upper surface 1403 of the side plate 140 Accordingly, the first and second guide slits 141' and 142' may be formed at positions offset from each other along the third direction Z3. In some embodiments, the side plate 140 may include an inner surface 1401 facing the battery cell 10 along the second direction Z2 and an outer surface 1402 opposite the battery cell 10. The side plate 140 may include end surfaces 1403 and 1404 connecting the inner surface 1401 and the outer surface 1402 of the side plate 140 to each other. In some embodiments, that the end surfaces 1403 and 1404 of the side plate 140 on which the second guide slit 142' is formed may refer to the upper surface 1403 and the lower surface 1404 of the side plate 140 adjacent to the positions of both ends of the columnar projection P along the third direction Z3 in which the columnar projection P extends. The second guide slits 142' formed on the upper surface 1403 and the lower surface 1404 of the side plate 140 may be formed at a level offset from the first guide slit 141' formed on the inner surface 1401 of the side plate 140 formed between the upper surface 1403 and the lower surface 1404 of the side plate 140 along the third direction Z3.

The third direction Z3 may correspond to the height direction of the side plate 140, and the second guide slit 142*'* may be formed on the upper surface 1403 and the lower surface 1404 of the side plate 140 corresponding to the highest or lowest level of the side plate 140. The first guide slit 141*'* may be formed on an inner surface 1401 of the side plate 140 formed between the upper surface 1403 and the lower surface 1404 of the side plate 140.

In some embodiments, the first and second guide slits 141*'* and 142' may be formed at positions offset from each other along the second direction Z2. For example, the first guide slit 141' may be formed on the inner surface 1401 of the side plate 140 facing the battery cell 10 along the second direction Z2, and the second guide slit 142*'* may be formed on the upper surface 1403 of the side plate 140. Accordingly, the first and second guide slits 141' and 142' may be formed at positions offset from each other along the second direction Z2. In some embodiments, the second guide slit 142*'* may be formed on an upper surface 1403 and a lower surface 1404 connecting the inner surface 1401 and the outer surface 1402 of the side plate 140 along the second direction Z2 corresponding to the thickness direction of the side plate 140, and/or may be formed on the upper surface 1403 and the lower surface 1404 adjacent to the positions of both ends of the columnar projection P along the third direction Z3. More specifically, the second guide slit 142' may be formed at a central position along the second direction Z2 on the end surfaces 1403 and 1404 of the side plate 140. For example, the second guide slit 142' may be formed at a central position between the inner surface 1401 and the outer surface 1402 of the side plate 140 along the second direction Z2 on the upper surface 1403 and the lower surface 1404 of the side plate 140. Accordingly, between the first guide slit 141' formed on the inner surface 1401 of the side plate 140 and the second guide slit 142' formed at a central position on the upper surface 1403 and the lower surface 1404 between the inner surface 1401 and the outer surface 1402 of the side plate 140, an offset may be formed along the second direction Z2.

In some embodiments, since the first and second guide slits 141' and 142' are formed at positions offset from each other along the second and third directions Z2 and Z3, the second and third guide blocks G2 and G3 inserted into the first and second guide slits 141' and 142' also may be formed at positions offset from each other along the second direction Z2 and the third direction Z3. For example, in one embodiment, the first and second guide blocks G1 and G2 may form steps from each other along the second and third directions Z2 and Z3. More specifically, the first and second guide blocks G1 and G2 may integrally extend from each other, but may be formed stepwise from each other.

In some embodiments, the guide block G may extend along the first direction Z1 crossing the third direction Z3 corresponding to the length of the columnar projection P, and the guide block G may extend with a wider or greater width than that of the columnar projection P along the first direction Z1 at both ends of the columnar projection P along the third direction Z3. For example, the guide block G may be formed with a wider or greater width than the columnar projection P, and may include first and second guide blocks G1 and G2 formed with a wider or greater width than the columnar projection P and substantially the same width along the first direction Z1. Since the first and second guide blocks G1 and G2 are formed to have substantially the same width, the maximum displacement of the columnar projection P may be regulated according to a difference between the widths of the first and second guide slits 141' and 142' formed to have substantially the same width. That is, according to one embodiment, through a difference in width between the first and second guide blocks G1 and G2 formed to have substantially the same width and the first and second guide slits 141' and 142' formed to have substantially the same width, the maximum displacement of the columnar projection P may be equally regulated.

In some embodiments, the guide block G may include a first guide block G1, e.g. the above-mentioned first guide block G1, bent outward in the second direction Z2 from the columnar projection P and a second guide block G2, e.g. the above-mentioned second guide block G2, bent upward or downward from the first guide block G1 in the third direction Z3. In some embodiments, the guide block G may be formed at both ends of the columnar projection P along the third direction Z3. The guide block G may be formed at both ends of the columnar projection P out of the columnar projection P along the third direction Z3. The guide block G may include the first guide block G1 bent along the second direction Z2 from the columnar projection P extending along the third direction Z3 and the second guide block G2 bent along the third direction Z3 at an outer position of the first guide block G1 along the second direction Z2 from above the first guide block G1. Like this, the second guide block G2 may be bent upward/downward from the first guide block G1 along the third direction Z3 at the outer position of the first guide block G1 along the second direction Z2, and/or may be formed at an offset position along the first guide block G1 and the second and third directions Z2 and Z3.

The guide block G may include a first guide block G1 bent along the second direction Z2 at both ends of the columnar projection P, and a first guide slit 141' open along the second direction Z2 may be formed so that the first guide block G1 bent along the second direction Z2 is inserted. In some embodiments, the guide block G may include a second guide block G2 bent upward/downward along the third direction Z3 at an outer position of the first guide block G1 along the second direction Z2, and a second guide slit 142' open along the third direction Z3 may be formed so that the second guide block G2 bent upward/downward along the third direction Z3 is inserted.

In some embodiments, a first guide slit 141' may open along the second direction Z2 and a second guide slit 142' open along the third direction Z3 may be formed on the side plate 140. The side plate 140 having first and second guide slits 141' and 142' may open along the second and third directions Z2 and Z3 partition between the first and second guide slits 141' and 142'. The side plate 140 may include a first member 141 extending along a first direction Z1 from a corner E connecting an inner surface 1401 to an upper surface 1403 or a lower surface 1404 of the side plate 140.

The first member 141 extends along the first direction Z1 from the corner E where the inner surface 1401 and the upper surface 1403 or lower surface 1404 of the side plate 140 come into contact with each other, and the first and second guide slits 141' and 142' may be partitioned on the inner surface 1401 and upper surface 1403 or lower surface 1404 of the side plate 140. More specifically, a first guide slit 141' opened along the second direction Z2 may be partitioned on the inner surface 1401 of the side plate 140, and the second guide slit 142' may be partitioned on the upper surface 1403 or the lower surface 1404 of the side plate 140. Like this, while in contact with the first and second guide slits 141' and 142' formed on the inner surface 1401 and upper surface 1403 or lower surface 1404 of the side plate 140, respectively, the first member 141 may partition the first and second guide slits 141*'* and 142' together and may be formed in a form surrounded by an insertion space forming the first and second guide slits 141' and 142'.

In some embodiments, the first guide slit 141' may be partitioned between the first member 141 and the inner surface 1401 of the side plate 140 on the inner surface 1401 of the side plate 140, and may be formed in an open form along the second direction Z2. In some embodiments, the second guide slit 142*'* is partitioned between the first member 141 and the outer surface 1402 of the side plate 140 on the upper surface 1403 or lower surface 1404 of the side plate 140, and is open along the third direction Z3 on the upper surface 1403 or lower surface 1404 of the side plate 140. The second guide slit 142' may be formed in an open shape along the second direction Z2 on the outer surface 1402 of the side plate 140. In some embodiments, a separate member for partitioning the second guide slit 142*'* may not be provided on the outer surface 1402 of the side plate 140, and the second guide slit 142' may be formed in an open form on the outer surface 1402 of the side plate 140 while being opened along the second direction Z2. For example, in one embodiment, the second guide slit 142*'* is open along the second direction Z2 on the outer surface 1402 of the side plate 140 while being formed in an open form along the third direction Z3 on the upper surface 1403 or lower surface 1404 of the side plate 140. As such, the second guide slit 142' may be formed in an open form continuously from the upper surface 1403 of the side plate 140 to the outer surface 1402 or from the lower surface 1404 to the outer surface 1402 of the side plate 140 while being formed continuously open along the second and third directions Z2 and Z3.

In some embodiments, the second guide slit 142' is formed in an open form along the third direction Z3 on the upper surface 1403 or lower surface 1404 of the side plate 140, and the second guide block G2 bent along the third direction Z3 may be inserted, and in that the second guide slit 142*'* is formed on the upper surface 1403 or lower surface 1404 of the side plate 140, it may be understood as being partitioned by the outer surface 1402 of the side plate 140 defining the upper surface 1403 or lower surface 1404 of the side plate 140. More specifically, the second guide slit 142*'* may be formed on the upper surface 1403 or lower surface 1404 of the side plate 140 formed between the inner surface 1401 and the outer surface 1402 of the side plate 140, and it may be understood that the second guide slit *142'* is formed between the first member 141 formed on the inner surface 1401 of the side plate 140 and the outer surface 1402 of the side plate 140.

In some embodiments, the insertion space forming the first and second guide slits 141' and 142' may be formed as one insertion space continuously surrounding the first member 141, and the guide block G may be inserted through one insertion space continuously formed to connect the first and second guide slits 141' and 142' to each other.

In some embodiments, the guide block G may be inserted into the insertion space forming the first and second guide slits 141' and 142' sequentially from the second guide block G2, and the second guide block G2 may be inserted in a priority order, and then the first guide block G1 may be inserted in a second order. At this time, the second guide block G2 preferentially inserted into the insertion space passes through the first guide slit 141' opened along the second direction Z2, and may be continuously connected to the first guide slit 141' and inserted into the second guide slit 142*'* open along the third direction Z3. Following the second guide block G2, the first guide block G1 inserted into the insertion space may be inserted into the first guide slit 141' opened along the second direction Z2. That is, in one embodiment, through one insertion space continuously connected to form the first and second guide slits 141' and 142', the guide block G including the first and second guide blocks G1 and G2 may be inserted, and the second guide block G2 and the first guide block G1 may be sequentially fitted along the second direction Z2 through the first guide slit 141*'* opened along the second direction Z2, and the second guide block G2 is inserted into a position where the second guide block G2 may physically interfere with the second guide slit 142', and as the first guide block G1 is inserted into a position where the first guide block G1 may physically interfere with the first guide slit 141', so that the guide block G including the first and second guide blocks G1 and G2 and the guide slit 140' including the first and second guide slits 141' and 142' may be fitted together.

In some embodiments, as the first and second guide slits 141' and 142' are connected through one insertion space continuously formed, the columnar projection P connected to the first and second guide blocks G1 and G2 inserted through the insertion space position may be fixed, for example, the columnar projection P may slide and move up to the maximum displacement allowed by the guide blocks G and the guide slits 140' formed at both ends of the columnar projection P along the first direction Z1, through the first guide block G1 bent along the second direction Z2 from the columnar projection P along the second and third directions Z2 and Z3, and the second guide block G2 bent along the third direction Z3 from the first guide block G1, the positions of the guide block G including the first and second guide blocks G1 and G2 and the columnar projection P connected to the guide block G may be fixed.

In some embodiments, the first guide slit 141' may be formed between the first member 141 and the inner surface 1401 of the side plate 140 along the third direction Z3. While the first guide block G1 inserted into the first guide slit 141' is inserted between the first member 141 and the inner surface 1401 of the side plate 140, the first guide block G1 may be fixed in position along the third direction Z3, and the columnar projection P connected to the first guide block G1 may be fixed in position.

While the columnar projection P along the second direction Z2 is supported on the inner surface 1401 of the side plate 140, the second guide block G2 may be supported on the outer surface of the first member 141 opposite to the inner surface 1401 of the first member 141 forming the same plane as the inner surface 1401 of the side plate 140. Like this, through the columnar projection P supported on the inside of the side plate 140 along the second direction Z2 and the second guide block G2 supported on the outer side of the side plate 140 (the outer surface 1402 of the first member 141), or through the columnar projection P fixed on opposite inner and outer sides of the side plate 140 along the second direction Z2 and the second guide block G2 connected to the columnar projection P, a position of the columnar projection P may be fixed along the second direction Z2.

In some embodiments, the columnar projection P and the guide blocks G formed at both ends of the columnar projection P may be integrally formed with respect to each other. Through a first guide block G1 inserted into the first guide slit 141' formed between the inner surface 1401 of the first member 141 and the side plate 140 along the third direction Z3 among the guide blocks G, and the second guide block G2 supported on the outer surface of the first member 141 opposite to the inner surface 1401 of the side plate 140 on which the columnar projection P is supported, position fixation may be performed in the second and third directions Z2 and Z3.

In some embodiments, the columnar projection P and the guide blocks G formed at both ends of the columnar projection P may be integrally formed with each other, for example, may be formed of an elastic material capable of elastic deformation. For example, among the pair of guide blocks G formed at both ends of the columnar projection P, that is, the pair of guide blocks G forming the upper sliding guide SG1 and the lower sliding guide SG2, after the upper guide block G forming the upper sliding guide SG1 is first inserted into the guide slit 140' formed at the upper position of the side plate 140, the remaining lower guide block G, that is, the lower guide block G forming the lower sliding guide SG2 may be inserted into the guide slit 140' formed at the lower position of the side plate (140) in the next order. More specifically, first, among a pair of guide blocks G formed at both ends of the columnar projection P, the upper guide block G may be inserted into the insertion space of the side plate 140 forming the first and second guide slits 141' and 142', and the guide block G may be inserted upward along the third direction Z3 from the second direction Z2 as if wrapping the first member 141 surrounded by the insertion space. In this way, in a state where the upper guide block G is inserted into the guide slit 140' formed at the upper position of the side plate 140, through the bending deformation of the columnar projection P that connects the upper and lower guide blocks G to each other, the lower guide block G may be inserted into the insertion space of the side plate 140 formed by the first and second guide slits 141' and 142', and the guide block G may be inserted downward along the third direction Z3 from the second direction Z2 as if wrapping the first member 141 surrounded by the insertion space. In some embodiments, the columnar projection P may have the longest dimension along the third direction Z3, and through elastic deformation along the third direction Z3, the upper guide block G enters the insertion space as if surrounding the first member 141, and may be inserted into the insertion space from the second direction Z2 upward along the third direction Z3, and with the upper guide block G inserted, the lower guide block G may enter into the insertion space as if surrounding the first member 141 and be inserted into the insertion space downward along the third direction Z3 from the second direction Z2.

Referring to Figure 3, in one embodiment, a corner portion C where the narrow side surface 14 and the wide side surface 15 of the battery cell 10 are connected to each other may have a first radius of curvature R1, and side surfaces P1 and P2 of the columnar projection P facing the corner portion C and on which the corner portion C is seated may have a second radius of curvature R2 greater than the first radius of curvature R1 of the battery cell 10. The corner portion C of the battery cell 10 may have a convex curved surface, and the side surfaces P1 and P2 of the columnar projection P may include a first curved surface P1 including a concave curved surface and a second curved surface P2 including a convex curved surface. At this time, the concave first curved surface P1 of the columnar projection P facing the convex corner portion C of the battery cell 10 and on which the corner portion C is seated may embrace the corner portion C of the battery cell 10 by having a second radius of curvature R2 greater than the first radius of curvature R1 formed by the corner portion C of the battery cell 10.l In one embodiment, the second radius of curvature R2 formed by the side surfaces P1 and P2 of the columnar projection P may be formed at least equal to or greater than the first radius of curvature R1 formed by the corner portion C of the battery cell 10.

In some embodiments, based on apex portion P3 of columnar projection P, among the battery cells 10 on both sides from the apex portion P3, the separation distance S to any one battery cell 10 may be formed in a relationship with the maximum displacement of the columnar projection P.I In one embodiment, the separation distance S may correspond to half of the distance L between the battery cells 10 adjacent to each other along the first direction Z1 The bisector D of the maximum displacement obtained by distributing the maximum displacement of the columnar projection P along the first direction Z1 to both sides based on apex portion P3 may be equal to or smaller than the separation distance S. Both the separation distance S and the bisector D of the maximum displacement are values measured on either side of the apex portion P3 of the columnar projection P, and expressed differently. The distance L between the battery cells 10 adjacent to each other along the first direction Z1 is formed larger than the maximum displacement of the columnar projection P guided between the battery cells 10 adjacent to each other, and the columnar projection P may be guided between these battery cells 10 adjacent to each other. For example, in one embodiment, when the maximum displacement of the columnar projection P is greater than the distance L between the battery cells 10 adjacent to each other, for example, as the maximum displacement allowed for columnar projection P exceeds the distance L between neighboring battery cells 10, the columnar projection P may move arbitrarily to a position outside of the battery cells 10 adjacent to each other. Accordingly, the columnar projection P, which is pressurized toward the battery cell 10 together with the side plate 140 along the second direction Z2, does not enter between the battery cells 10 adjacent to each other. For example, by coming into contact on the narrow side surface 14 of any one of the battery cells 10 adjacent to each other, the columnar projection P may interfere with the assembly of the side plate 140, and accordingly, in one embodiment, in the maximum displacement allowed for the columnar projection P along the first direction Z1 or the bisector D of the maximum displacement divided into both sides around the apex portion P3, in relation to the distance L between the battery cells 10 adjacent to each other along the first direction Z1 or the separation distance S to any one battery cell 10 centered on the apex portion P3, the maximum displacement bisector D may be formed equal to or narrower than the separation distance S. Thus, it is possible to prevent the columnar projection P, which is allowed to move up to the maximum displacement, from coming into contact with the narrow side surface 14 of any one battery cell 10, escaping between neighboring battery cells 10, and assembly of the side plate 140 may be prevented from being hindered by the columnar projection P.

In some embodiments, the distance L between the battery cells 10 adjacent to each other along the first direction may correspond to the distance between the wide side surfaces 15 of the battery cells 10 adjacent to each other. In one embodiment, an insulating sheet 50 may be disposed between adjacent battery cells 10 arranged along the first direction Z1, and a distance L between the adjacent battery cells 10 may be formed. In some embodiments, the columnar projection P may provide internal pressure in the longitudinal direction along the first direction Z1 while entering between the battery cells 10 adjacent to each other along the first direction Z1.

While the present disclosure has been particularly shown and described with reference to embodiments thereof, it will be understood that various changes in form and details may be made therein without departing from the scope of the present invention as set forth in the following claims.

## Claims

1. A battery pack comprising:
a plurality of battery cells (10) arranged in a first direction (Z1); and
a side plate (140) covering a periphery of the plurality of battery cells (10) in a second direction (Z2) crossing the first direction (Z1), the side plate (140) including a columnar projection (P) protruding toward the battery cells (10) and between adjacent battery cells (10) along the first direction (Z1), wherein the columnar projection (P) is slidably coupled to the side plate (140) along the first direction (Z1).

2. The battery pack according to claim 1, wherein a width of the columnar projection (P) along the first direction (Z1) varies in the second direction (Z2) so that the columnar projection (P) formed on the side plate (140) is configured to convert a pressure or a displacement in the second direction (Z2) into a pressure or a displacement in the first direction (Z1) between the adjacent battery cells (10).

3. The battery pack according to claim 2, wherein the width of the columnar projection (P) decreases from an outer position adjacent to the side plate (140) to an inner position adjacent to the battery cell (10) along the second direction (Z2) and the columnar projection (P) is formed in a wedge shape including an apex portion (P3) protruding longest from the side plate (140) and side surfaces (P1, P2) on both sides extending to converge toward the apex portion (3).

4. The battery pack according to claim 3, wherein the apex portion (P3) is formed as a rounded curved surface and/or the side surfaces (P1, P2) are each formed as a rounded curved surface.

5. The battery pack according to claim 3 or 4, wherein the side surfaces (P1, P2) of the columnar projection (P) are each formed in a concave shape to surround a convex corner portion (C) of the battery cell (10) or
wherein the apex portion (P3) of the columnar projection (P) is formed as a convex curved surface toward the outside of the columnar projection (P) and the side surfaces (P1, P2) of the columnar projection (P) each include a curved surface concave toward inside of the columnar projection (P).

6. The battery pack according to claim 4 or 5, wherein the side surfaces (P1, P2) of the columnar projection (P) each comprises:
a first curved surface contacting the side plate (140); and
a convex second curved surface in contact with the apex portion (P3).

7. The battery pack according to claim 6, wherein the first and second curved surfaces have centers of curvature at opposite positions with the side surface of the columnar projection (P) as a boundary.

8. The battery pack according to claim 7, wherein the side surfaces (P1, P2) of the columnar projection (P) further each comprise an inflection (V) formed between the first and second curved surfaces,
wherein the first curved surface comprises a concave curved surface from the side plate (140) to the inflection (V) and
wherein the second curved surface comprises a convex curved surface extending from the inflection (V) to the apex portion (P3).

9. The battery pack according to any one of claims 3 to 8, wherein the battery cell (10) includes a wide side surface (15) facing an adjacent battery cell (10) along the first direction (Z1) and a narrow side surface (14) facing the side plate (140),
wherein the narrow side surface (15) of the battery cell (10) faces the side plate (140), and
wherein the corner portion (C) where the narrow side surface (14) and the wide side surface (15) of the battery cell (10) come into contact with each other faces the side surface of the columnar projection (P) protruding from the side plate (140).

10. The battery pack according to any one of the preceding claims, further comprising a sliding guide (SG1, SG2) disposed between the columnar projection (P) and the side plate (140) to support sliding of the columnar projection (P) along the first direction (Z1).

11. The battery pack according to claim 10, wherein the sliding guide (SG1, SG2) comprises:
guide blocks (G) formed at both ends of the columnar projection (P) along a third direction (Z3) crossing the first and second directions (Z1and Z2); and
a guide slit (140') formed in the side plate (140) into which the guide block (G) is insertable.

12. The battery pack according to claim 11, wherein the width of the guide slit (140') along the first direction (Z1) is greater than the width of the guide block (G) along the first direction (Z1), and
wherein the width of the guide block (G) along the first direction (Z1) is greater than the width of the columnar projection (P) along the first direction (Z1).

13. The battery pack according to claim 12, wherein the guide block (G) and the guide slit (140') are fitted to each other and respectively comprise a first guide block (G1) and a first guide slit (141') and a second guide block (G2) and a second guide slit (142') that support sliding of the guide block (G) through physical interference with each other,
wherein the first and second guide blocks (G1, G2) form substantially same width of the guide block (G) along the first direction (Z1), and
the first and second guide slits (141', 142') form substantially same width of the guide slits (140') along the first direction (Z1),
wherein the first and second guide slits (141', 142') and the first and second guide blocks (G1, G2) are formed at positions offset from each other along the third direction (Z3) corresponding to a height direction of the side plate (140) in which the columnar projection (P) extends, and
wherein the first and second guide slits (141', 142') and the first and second guide blocks (G1, G2) are formed at positions offset from each other along the second direction (Z2) corresponding to a thickness direction of the side plate (140).

14. The battery pack according to claim 11, wherein the guide block (G) comprises:
a first guide block (G1) bent along the second direction (Z2) at both ends of the columnar projection (P) along the third direction (Z3); and
a second guide block (G2) bent from the first guide block (G1) along the third direction (Z3),
wherein the second guide block (G2) is bent along the third direction (Z3) from an outer position along the second direction (Z2) among the first guide blocks (G1).

15. The battery pack according to claim 13 or 14, wherein a first guide slit (141') into which the first guide block (G1) is inserted is opened along the second direction (Z2) in an inner surface of the side plate (140) facing the battery cell (10), and
wherein a second guide slit (42') into which the second guide block (G2) is inserted is opened along the third direction (Z3) in an end surface connecting an inner surface of the side plate (140) facing the battery cell (10) to an outer surface of a side plate (140) opposite to the battery cell (10).
